# EUROPÄISCHE PATENTSCHRIFT

(11) **EP 2 050 919 B1**
(45) Veröffentlichungstag und Bekanntmachung des Hinweises auf die Patenterteilung: **22.06.2011**
(21) Anmeldenummer: 08166339.5
(22) Anmeldetag: 10.10.2008
(51) Int. Cl.: E21B 7/04, E21B 7/20, E21B 47/00, F16L 55/165

(54) **Verfahren und Vorrichtung zum Einziehen eines aus Kurzrohren zusammengesetzten Rohrstranges in einen Bohrkanal mit Zugkraftmessung**
Method and device to pull a pipeline comprised of short pipes into a boring channel with measurement of pulling power
Procédé et dispositif destiné à l'introduction d'un faisceau tubulaire constitué de tuyaux courts dans un canal de forage à l'aide d'une mesure de la force de traction

(30) Priorität: 16.10.2007 DE 102007049605
(43) Veröffentlichungstag der Anmeldung: 22.04.2009
(73) Patentinhaber: TERRA AG fuer Tiefbautechnik, 4805 Brittnau (CH); Karosan GmbH innovative Kanal- und Rohrleitungssanierung, 66557 Illingen (DE)
(72) Erfinder: Jenne, Dietmar Dipl.-Wi.-Ing., 4805, Brittnau (CH); Zimmer, Werner Hans, 66557, Illingen (DE)
(74) Vertreter: Schaumburg, Thoenes, Thurn, Landskron, Eckert

(56) Entgegenhaltungen:
- WO-A1-03/004823
- DE-A1- 10 019 663
- US-A1- 2006 088 384

## Beschreibung

Die Erfindung betrifft ein Verfahren und eine Vorrichtung zum Einziehen eines aus Kurzrohren zusammengesetzten Rohrstranges in einen Bohrkanal, wobei der Rohrstrang mit seinem einen axialen Ende an einem Zugkopf, der über ein erstes Zugglied mit einer Zugvorrichtung verbunden ist, angeschlossen und über ein den Rohrstrang durchsetzendes zweites Zugglied zwischen dem Zugkopf und einer an seinem anderen axialen Ende anliegenden Druckplatte eingespannt wird.

Ein Verfahren der vorstehend genannten Art ist beispielsweise aus der EP 860 638 A1 bekannt.

Bei der grabenlosen Rohr- und Leitungsverlegung werden häufig aus Platzgründen Kurzrohre verlegt. Dabei werden hier unter Kurzrohre alle Neurohre verstanden, die über Steckmuffen miteinander verbunden werden, unabhängig von ihrer tatsächlichen Länge.

Kurzrohre werden immer häufiger beim so genannten Berstlining und beim Kaliberbersten verwendet. Beim Berstlining wird zunächst das Altrohr geborsten, der Bohrkanal von einem Aufweitkopf vergrößert und anschließend in diesen Bohrkanal der Rohrstrang eingezogen, dessen Außendurchmessung etwas kleiner als der Aufweitkopf ist. Beim Kaliberbersten werden ein Kalibrierkopf und das Neurohr in das Altrohr eingezogen, ohne dieses zu beschädigen oder zu zerstören. Die Außendurchmesser des Kalibrierkopfes und des Neurohrs sind etwas kleiner als der Innendurchmesser des Altrohres.

Kurzrohre müssen dort eingesetzt werden, wo das Berstlining oder Kaliberbersten von Schacht-zu-Schacht oder aus einem Schacht oder aus einer kleinen Grube heraus erfolgt. Kurzrohre können auch mit steuerbaren Horizontalbohranlagen verlegt werden, wenn die Zielgrube zu klein für Endlosrohre ist.

Nach den Regelwerken des DVGW, der DWA und des RSV müssen während des Einziehens von Neurohren zur Leitungssanierung die auf die Neurohre wirkenden Zugkräfte kontinuierlich gemessen und aufgezeichnet werden. Dazu reicht es nicht aus, die Gesamtzugkraft, die von der Zugvorrichtung aufzubringen ist, zu ermitteln und festzuhalten. Es müssen auch die ausschließlich an den Neurohren wirkenden Zugkräfte ermittelt und festgehalten werden. Aus der DE 102 61 553 B4 ist es hierzu bekannt, einen mit dem einzuziehenden Neurohr verbindbaren Adapter über eine Zugkraftmesseinrichtung mit dem Aufweitkonus zu verbinden. Eine ähnliche Lösung wird in der DE 100 19 663 C2 beschrieben. Beide Lösungen sind aber nur für das Einziehen von Endlosrohren geeignet.

Die WO 03/004823 A1, das als nächstliegender Stand der Technik angesehen wird, beschreibt ein Verfahren und eine Vorrichtung zum grabenlosen Einziehen eines aus einer Mehrzahl von Kurzrohren zusammengesetzten Rohrstranges in einem Bohrkanal, wobei der Rohrstrang mit seinem einen axialen Ende an einem Zugkopf, der über ein erstes Zugglied mit einer Zugvorrichtung verbunden ist, angeschlossen und über ein den Rohrstrang durchsetzendes zweites Zugglied zwischen dem Zugkopf und einer an dem anderen axialen Ende des Rohrstranges anliegenden Druckplatte eingespannt wird. Dabei wird die von der Zugvorrichtung auf das zweite Zugglied ausgeübte Kraft beim Einziehen des Rohrstranges gemessen.

Der Erfindung liegt die Aufgabe zugrunde, ein Verfahren der eingangs genannten Art anzugeben, bei dem die auf den einzuziehenden Rohrstrang, der aus einer Mehrzahl von zusammengesteckten Kurzrohren besteht, einwirkenden Kräfte, insbesondere Reibungskräfte zuverlässig ermittelt werden können.

Diese Aufgabe wird erfindungsgemäß dadurch gelöst, dass die von dem zweiten Zugglied auf die Druckplatte ausgeübte Kraft beim Einziehen des Rohrstranges gemessen wird.

Unabhängig davon, an welchem der Kurzrohre die Reibungskräfte vorwiegend angreifen, wirkt die Gesamtbelastung auf die Druckplatte, so dass an dieser Stelle die auf den Rohrstrang wirkende Kraft zuverlässig erfasst werden kann. Dies kann zum Beispiel so erfolgen, dass zwischen der dem Rohrstrang abgewandten Rückseite der Druckplatte und einem zuggliedfesten Teil ein Druckaufnehmer angeordnet wird. Ebenso wäre es aber auch möglich, zwischen einem innerhalb des Rohrstranges liegenden gestängefesten Teil und der Druckplatte eine Zugmessvorrichtung vorzusehen.

Zweckmäßigerweise werden die Messergebnisse an einen Arbeitsterminal übertragen, aufgezeichnet und angezeigt, wobei dieses vorzugsweise in Echtzeit geschieht. Die Übertragung kann in an sich bekannter Weise drahtlos oder per Kabel erfolgen, das beispielsweise von der Druckplatte her durch die Startgrube zum Arbeitsterminal geführt wird.

Bei einer bevorzugten Lösung des erfindungsgemäßen Verfahrens wird in Abhängigkeit der Messergebnisse ein Schmiermittel in den Ringspalt zwischen dem Rohrstrang und der Rohrkanalwand eingeführt, um insbesondere bei zunehmender Rohrstranglänge die Mantelreibung herabzusetzen.

Zusätzlich zu der Messung der unmittelbar am Rohrstrang angreifenden Kräfte ist es auch vorteilhaft, wenn die von der Zugvorrichtung aufzubringende Gesamtzugkraft gemessen und aufgezeichnet wird. Dabei kann auch der von dem Zugkopf zurückgelegte Weg gemessen werden, um so ein Kraft-Weg-Diagramm darzustellen und besonders kritische Punkte im Bohrkanal zu ermitteln. Die Zugvorrichtung kann beispielsweise hydraulisch arbeiten. Damit die Zugvorrichtung arbeiten kann, muss Druck aufgebaut werden, dieser wird mittels eines Druckmessgerätes gemessen und die Messdaten werden an den Arbeitsterminal gesendet. Dort können die ermittelten Daten mit Hilfe eines geeigneten Programms verarbeitet und die daraus berechnete Zugkraft dargestellt werden, so dass bei Annäherung an eine maximal zulässige Zugkraft eine Warnmeldung erfolgt und/oder beim Erreichen des Maximums die Zugvorrichtung manuell oder automatisch abgeschaltet wird. Dieser Vorgang wird für die Qualitätssicherung protokolliert. Der vom Zugkopf zurückgelegte Weg kann beispielsweise über einen Impulszähler ermittelt werden, der durch das einlaufende erste Zugglied, in der Regel ein Seil oder eine Kette, angetrieben wird. Auch diese Messdaten werden dem Arbeitsterminal übermittelt.

Beim Sanieren von Altleitungen wird heute in der Regel der Zustand der Altleitung mit Hilfe einer durch die Altleitung gezogenen Videokamera ermittelt. Dieses bei der Leitungsinspektion aufgenommene Video kann zeitgleich mit der Bewegung des Zugkopfes abgespielt werden, wobei bei einer bevorzugten Ausgestaltung der Erfindung die Position des Zugkopfes und die bei der jeweiligen Position auftretenden Kräfte eingeblendet werden. Auf diese Weise ergibt sich ein sehr anschauliches Bild, wo welche Kräfte auftreten und welche Ursache sie unter Umständen haben können.

Die Erfindung betrifft ferner eine Vorrichtung zum Einziehen eines aus Kurzrohren zusammengesetzten Rohrstranges in einen Bohrkanal, umfassend einen Zugkopf, der einerseits über ein erstes Zugglied mit einer Zugvorrichtung verbindbar ist und an dem andererseits der Rohrstrang anschließbar ist, sowie ein zweites Zugglied, das an seinem einen Ende mit dem Zugkopf und an seinem anderen Ende mit einer Druckplatte verbindbar ist, die zur Anlage an dem jeweiligen zugkopffernen Ende des Rohrstranges bestimmt ist. Erfindungsgemäß ist zwischen dem zweiten Zugglied und der Druckplatte eine Kraftmesseinrichtung angeordnet.

Bei einer bevorzugten Lösung ist das zweite Zugglied ein Zuggestänge, das aus einzelnen Gestängeabschnitten zusammengesetzt ist, wobei die Gestängeabschnitte ein jeweils auf ihrer gesamten Länge durchgehendes Außengewinde haben und wobei zur Verbindung der Gestängeabschnitte mit einem entsprechenden Innengewinde versehene Verbindungshülsen vorgesehen sind.

Bei der erfindungsgemäßen Lösung können die Gewindeabschnitte vom laufenden Meter entsprechend der jeweiligen Länge der verwendeten Kurzrohre abgeschnitten werden, was ggf. auch noch auf der Baustelle erfolgen kann und eine bequeme Anpassung der Gestängeabschnitte an die jeweils zu verlegenden Kurzrohre erlaubt. Derartige Stangen mit einem Außengewinde, vorzugsweise einem groben Außengewinde mit großer Steigung, wie es beispielsweise bei Zugankern verwendet wird, können preiswert hergestellt werden.

Vorzugsweise ist das Zuggestänge innerhalb des Rohrstranges mit Zentriermittel verbindbar, um das Zuggestänge in einer axialen Position bezüglich des Rohrstranges zu halten. Diese Zentriermittel können einen auf den jeweiligen Gewindeabschnitt aufschraubbaren Zentrierkörper umfassen. Beispielsweise kann eine Verbindungshülse durch einen solchen hülsenförmigen Zentrierkörper ersetzt werden, der eine Mehrzahl von radial von dieser Zentrierhülse abstehende Zentrierstreben umfasst. Die Länge der Zentrierstreben kann einstellbar sein, um die Zentriervorrichtung an unterschiedliche Rohrdurchmesser anpassen zu können.

Der Zentrierkörper kann aber auch von einer Ringscheibe gebildet sein, deren Innendurchmesser etwas größer als der Durchmesser des Zuggestänges und deren Außendurchmesser geringfügig kleiner als der Innendurchmesser des Rohrstranges ist, so dass die Scheibe einfach über das Gestänge geschoben und zusammen mit diesem in ein Kurzrohr eingesetzt wird. Eine solche Ringscheibe ist natürlich nur für einen bestimmten Rohrdurchmesser geeignet.

Um ein rasches Auswechseln der Druckplatte beim Ansetzen eines neuen Kurzrohres zu ermöglichen, hat die Druckplatte vorzugsweise einen radialen Schlitz, so dass sie seitlich auf den jeweiligen Gestängeabschnitt aufsetzbar ist bzw. von diesem abgezogen werden kann.

Um ein Gleitmittel zwischen den Außenumfang des Rohrstranges und die Wand des Bohrkanals einführen zu können, hat der Zugkopf bei einer bevorzugten Lösung der Erfindung mindestens einen mit einer Gleitmittelleitung verbindbaren Gleitmittelkanal, der an der Außenumfangsfläche des Zugkopfes mündet. Um das Gleitmittel zuzuführen, können die Gestängeabschnitte und die Verbindungshülsen hohl sein, so dass die miteinander verbundenen Gestängeabschnitte eine mit dem Gleitmittelkanal verbindbare Gleitmittelleitung bilden. Die Gleitmittelleitung kann aber auch von der Zielgrube her an den Zugkopf herangeführt werden.

Der Zugkopf hat zweckmäßigerweise einen konischen Kopfteil der zum Aufweiten oder zum Kaliberbersten dient, und einen am durchmessergroßen Ende desselben ansetzenden Schaftteil, der zum Anschluss des Rohrstranges bestimmt ist. Dabei kann der Schaftteil einen gegenüber dem Rohrdurchmesser geringeren Außendurchmesser haben, so dass der Schaftteil in das Rohrende eingeschoben wird. Ebenso kann aber auch der Schaftteil ein Rohrstutzen mit einem gegenüber dem Außendurchmesser des Rohrstranges größeren Innendurchmesser sein, so dass der Rohrstrang mit seinem Ende in den Schaftteil eingeschoben wird. In diesem Falle ist es zweckmäßig, wenn an der Außenseite des Zugkopfes eine Markierung angebracht ist, die der Lage des vorderen Endes des in den Schaftteil eingeschobenen Rohrstranges entspricht. Auf diese Weise kann der Rohrstrang genau bis zu der gewünschten Position in der Zielgrube eingezogen werden, ohne dass der Zugkopf demontiert werden muss, um die Position feststellen zu können.

Die folgende Beschreibung erläutert in Verbindung mit den beigefügten Zeichnungen die Erfindung anhand eines Ausführungsbeispieles. Es zeigen:
- Fig. 1: einen Axialschnitt durch ein einzuziehendes Rohr mit der hierzu dienenden Vorrichtung gemäß einer ersten Ausführungsform der Erfindung,
- Fig. 2: eine der Figur 1 entsprechende Ansicht gemäß einer zweiten Ausführungsform der Erfindung,
- Fig. 3: eine vergrößerte Schnittdarstellung des Zugkopfes mit dem vorderen Ende des einziehenden Rohrstranges,
- Fig. 4: eine perspektivische Darstellung einer speziellen Ausführungsform der Druckplatte und
- Fig.5: einen schematischen Schnitt durch einen Bohrkanal mit Startgrube und Zielgrube und der erfindungsgemäßen Einzugsvorrichtung zur Erläuterung des Einzugverfahrens.

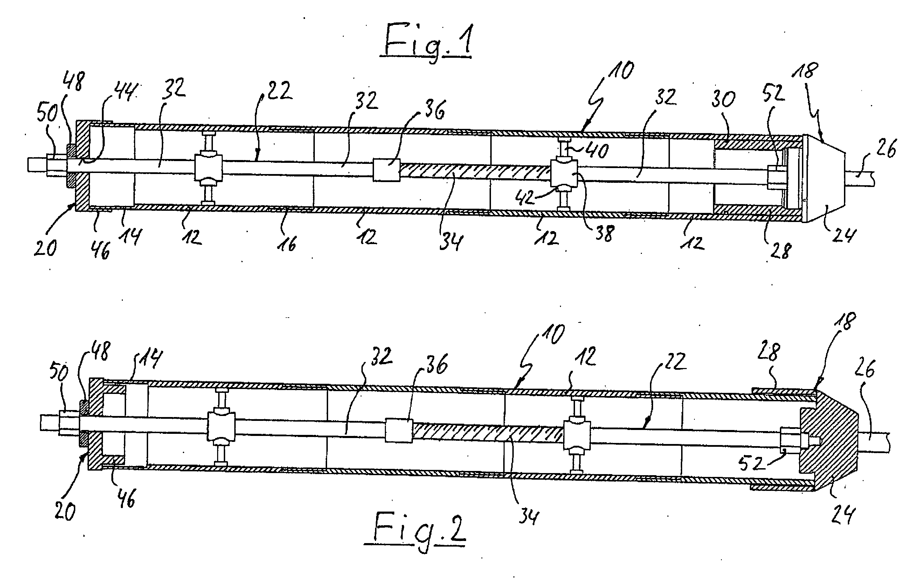

Figur 1 zeigt in einem die Achse enthaltenden Schnitt einen allgemein mit 10 bezeichneten Rohrstrang, der aus einzelnen Kurzrohren 12 besteht, die über Steckmuffen miteinander verbunden sind und hierzu jeweils an ihrem einen Ende eine Muffe 14 mit gegenüber dem übrigen Rohrdurchmesser größeren Innendurchmesser und an ihrem anderen Ende ein Steckteil 16 mit gegenüber dem übrigen Rohrdurchmesser kleineren Außendurchmesser haben. Der aus den einzelnen ineinander gesteckten Kurzrohren 12 bestehende Rohrstrang 10 hat einen gleich bleibenden Außendurchmesser.

Der Rohrstrang 10 ist zwischen einem allgemein mit 18 bezeichneten Zugkopf und einer Druckplatte 20 eingespannt, wobei der Zugkopf 18 und die Druckplatte 20 durch ein Zuggestänge 22 miteinander verbunden sind.

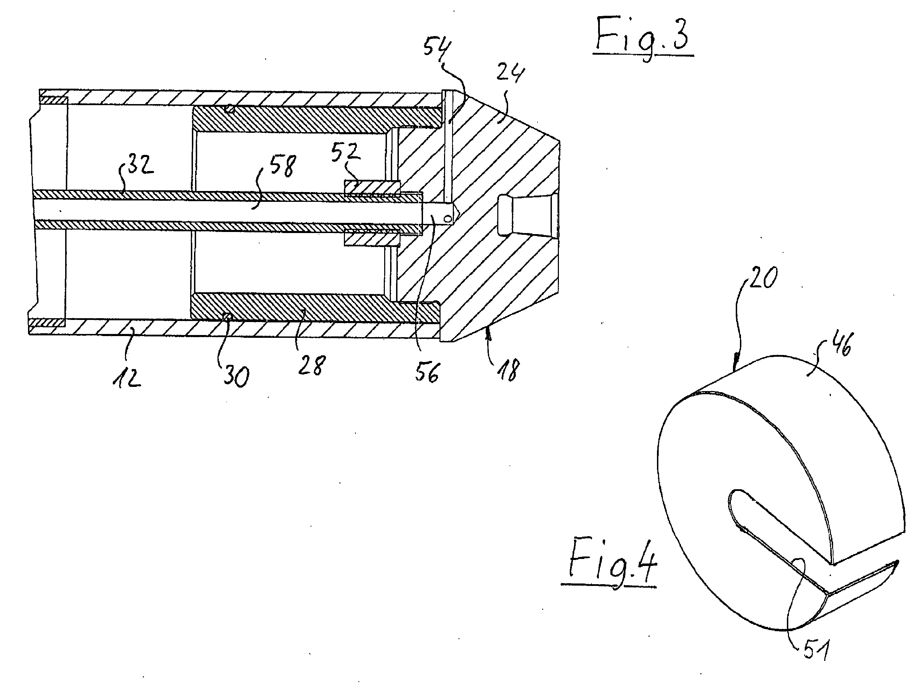

Der Zugkopf 18 hat einen kegelstumpfförmigen Kopfteil 24, das an seinem durchmesserkleineren Ende beispielsweise über ein Seil, ein Gestänge, eine Kette 26 oder dergleichen mit einer nicht dargestellten Zugmaschine verbunden werden kann. An seinem rückwärtigen durchmessergrößeren Ende ist der Kopfteil 24 mit einem Schaftteil 28 verbunden, dessen Außendurchmesser bei dem in der Figur 1 dargestellten Ausführungsbeispiel so gewählt ist, dass der Schaftteil in den Rohrstrang 10 bzw. das erste Kurzrohr 12 eingesteckt werden kann. Bei der Ausführungsform gemäß Figur 2 ist der Schaftteil von einem Rohrstutzen gebildet, dessen Durchmesser so gewählt ist, dass das dem Zugkopf 18 benachbarte Ende des Rohrstranges 10 in den Schaftteil eingesteckt wird. Zur besseren Abdichtung des Innenraumes des Rohrstranges 10 trägt der Schaftteil 28 auf seinem Außenumfang einen Dichtring 30 (Fig. 1 und 3).

Das Zuggestänge besteht aus Gestängeabschnitten 32, die als Rohre ausgebildet sind und auf ihrem Außenumfang ein durchgehendes Gewinde 34 haben, das in den Figuren 1 nur schematisch angedeutet ist. Die einzelnen Gestängeabschnitte werden durch rohrförmige Verbindungshülsen 36 miteinander verschraubt, die ein dem Außengewinde 34 entsprechendes Innengewinde haben. An die Stelle der Verbindungshülsen können Zentrierhülsen 38 treten, die auf ihrem Außenumfang radial abstehende Zentrierstreben 40 tragen. Die Streben 40, von denen vorzugsweise drei in gleichen Winkelabstand voneinander vorgesehen sind, können beispielsweise im Gewindestutzen 42 eingeschraubt sein, so dass ihre radiale Länge in gewissem Umfange einstellbar ist.

Die Druckplatte 20 hat eine zentrale Bohrung 44, durch die das Zuggestänge 22 frei hindurchtreten kann, wie dies die Figuren 1 und 2 zeigen. Ferner schließt sich an die Druckplatte 20 ein Rohrstutzen 46 an, in den bei dem Ausführungsbeispiel gemäß Figur 1 das der Druckplatte 20 zugewandte Ende des Rohrstrangs 10 eingesteckt ist, während bei der Ausführungsform gemäß Figur 2 der Durchmesser dieses Stutzens 46 so gewählt ist, dass der Stutzen in das Rohrende eingreift.

Auf das durch die Druckplatte 20 hindurch tretende Ende des letzten Gestängeabschnittes 32, ist eine ringförmige Kraftmessdose 48 aufgesteckt, die mittels einer Spannmutter 50 gegen die Druckplatte 20 gespannt ist bzw. die Druckplatte 20 gegen das Ende des Rohrstrangs 10 presst. Mit Hilfe eines geeigneten Werkzeuges oder auch manuell kann die Spannmutter 50 so angezogen werden, dass die Kurzrohre 12 mit einer vorgegebenen und durch die Messdose 48 ermittelbaren Kraft ineinander geschoben werden.

Bei der Ausführungsform gemäß Fig. 4 hat die Druckplatte 20 einen radialen Schlitz 51, so dass sie von der Seite her auf den Gestängeabschnitt 32 aufschiebbar ist.

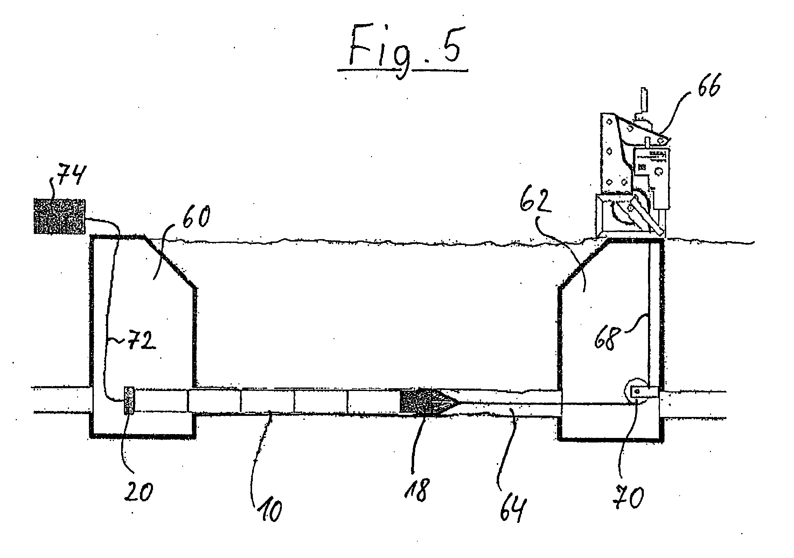

Fig.5 zeigt nun einen schematischen Schnitt durch ein Gelände mit einer Startgrube 60 und einer Zielgrube 62, die einen Bohrkanal 64 unterbrechen, wobei in das zwischen ihnen liegende Stück des Bohrkanals 64 der an dem Zugkopf 18 hängende Rohrstrang 10 eingezogen werden soll. Zum Einziehen dient eine oberhalb der Zielgrube 62 angeordnete Zugmaschine 66, die an sich bekannt ist und hier nicht näher erläutert wird. Sie zieht über ein Zugseil 68, das um eine in der Zielgrube 62 angeordnete Rolle 70 umgelenkt ist, den Zugkopf 18. Von der Druckplatte 20 bzw. der in Fig.5 nicht dargestellten Kraftmessdose 48 geht ein Kabel 72 aus, das zu einem Arbeitsterminal 74 führt.

Mit der soweit beschriebenen Vorrichtung läuft das Verfahren beim Einziehen eines Rohrstranges in einen Bohrkanal folgendermaßen ab:

Der erste Gestängeabschnitt 32 wird so abgelängt, dass er nach dem Einschrauben in einen am Kopfteil 24 des Zugkopfes 18 angeordneten Gewindestutzen 52 ein wenig (ca. 100 mm) hinter dem ersten Kurzrohr 12 herausragt, das auf den Schaftteil 28 des Zugkopfes 18 aufgesteckt ist. Die Druckplatte wird auf den herausragenden Teil des Gestängeabschnittes 32 aufgesteckt. Anschließend wird die Kraftmessdose 48 von hinten auf das Gestänge geschoben. Dann wird die Spannmutter 50 auf den Gestängeabschnitt geschraubt und mit einem Werkzeug so stark vorgespannt, dass die Kraftmessdose diejenige Kraft anzeigt, mit der die Kurzrohre während des Rohreinzugs vorgespannt sein sollen (beispielsweise 30kN). Die Spannmutter kann auch mit einem leicht angetriebenen Werkzeug angezogen werden, um den Rohrwechsel so leicht und schnell wie möglich auszuführen. Die Kraftanzeige wird dann auf Null justiert und das erste Kurzrohr in den Bohrkanal oder das Altrohr eingezogen. Während des Rohreinzugs zeigt die Kraftmessdose diejenige Kraft an, mit der das Kurzrohr eingezogen wird. Bei dieser Zugkraft handelt es sich im wesentlichen um die Reibungskräfte zwischen den Kurzrohren und der Bohrkanalwand bzw. der Wand des Altrohres. Diese Zugkraft darf vorgegebene Werte nicht überschreiten. Die Zugkraft wird aufgezeichnet oder in einem Computer angezeigt und abgespeichert.

Nachdem das erste Kurzrohr eingezogen ist, wird die Spannmutter 50 abgeschraubt, die Kraftmessdose nach hinten abgezogen und die Druckplatte 20 weggezogen. Eine Verbindungshülse 36 wird auf den ersten Gestängeabschnitt aufgeschraubt. Der nächste Gestängeabschnitt wird entsprechend der Länge des Kurzrohrs abgelenkt, in das zuvor angesetzte nächste Kurzrohr gesteckt und in die Verbindungshülse 36 geschraubt. Dadurch, dass das Zuggestänge 22 ein durchgehendes Außengewinde 34 besitzt, lässt es sich immer mit entsprechenden Verbindungshülse 36 verschrauben, egal auf welcher Länge es abgelängt wurde. Zweckmäßigerweise werden grobe Außengewinde mit großer Steigung verwendet, wie sie beispielsweise bei Zugankern üblich sind. Die Druckplatte 20, die Kraftmessdose 48 und die Spannmutter 50 werden wieder montiert, wie dies oben beschrieben wurde. Durch Anziehen der Spannmutter wird das neue Kurzrohr 12 in den bisherigen Rohrstrang gezogen. Dadurch rastet die Steckmuffenverbindung zwischen den Kurzrohren 12 vorschriftsmäßig ein. Die Kurzrohre 12 werden wieder mit der vorgeschriebenen Kraft vorgespannt. Die während des Rohreinzuges auf den Rohrstrang tatsächlich wirkende Kraft wird wieder gemessen und aufgezeichnet, wie dies oben beschrieben wurde.

Um die Mantelreibung zu vermindern, ist es zweckmäßig, zwischen den Außenumfang des Rohrstranges 10 und die Bohrkanalwand ein Gleitmittel oder Schmiermittel wie Bentonit einzuführen. Durch die Verminderung der Reibung werden die erforderlichen Zugkräfte verringert. Um das Schmiermittel zuzuführen, hat der Zugkopf 18 eine Mehrzahl von radialen Schmiermittelkanälen 54 (Fig. 3), die an dem Außenumfang des Kopfteiles 24 münden und über einen zentralen Kanal 56 mit dem Innenraum 58 des rohrförmigen Zuggestänges 22 in Verbindung stehen. Das Zuggestänge 22 kann so als Schmiermittelleitung verwendet werden, um Schmiermittel in den Ringspalt zwischen den Rohrstrang 10 und der Bohrkanalwand zu pumpen.

Die von der Kraftmessdose gelieferten Signale werden über das Kabel 72 an den Arbeitsterminal 84 übermittelt, dort aufbereitet, aufgezeichnet und dargestellt. Zusätzlich zu den von der Kraftmessdose gelieferten Messwerten kann auch die Gesamtzugkraft an der Zugmaschine 66 ermittelt werden, beispielsweise indem der von der Zugmaschine aufzubringende hydraulische Druck entsprechend ausgewertet wird.

## Patentansprüche

1. Verfahren zum grabenlosen Einziehen eines aus einer Mehrzahl von Kurzrohren (12) zusammengesetzten Rohrstranges (10) in einen Bohrkanal (64), wobei der Rohrstrang (10) mit seinem einen axialen Ende an einen Zugkopf (18), der über ein erstes Zugglied (68) mit einer Zugvorrichtung (66) verbunden ist, angeschlossen und über ein den Rohrstrang (10) durchsetzendes zweites Zugglied (22) zwischen dem Zugkopf (18) und einer an dem anderen axialen Ende des Rohrstranges (10) anliegenden Druckplatte (20) eingespannt wird, **dadurch gekennzeichnet, dass** die vom zweiten Zugglied (22) auf die Druckplatte (20) ausgeübte Kraft beim Einziehen des Rohrstranges (10) gemessen wird.

2. Verfahren nach Anspruch 1, **dadurch gekennzeichnet, dass** zwischen der dem Rohrstrang (10) abgewandten Rückseite der Druckplatte (20) und einem zuggliedfesten Teil (50) ein Druckaufnehmer (48) angeordnet wird.

3. Verfahren nach Anspruch 1 oder 2, **dadurch gekennzeichnet, dass** in Abhängigkeit der Messergebnisse ein Schmiermittel in den Ringspalt zwischen dem Rohrstrang (10) und dem Bohrkanal (64) eingeführt wird.

4. Verfahren nach einem der Ansprüche 1 bis 3, **dadurch gekennzeichnet, dass** die von der Zugvorrichtung (66) aufzubringende Gesamtzugkraft gemessen und aufgezeichnet wird.

5. Verfahren nach einem der Ansprüche 1 bis 4, **dadurch gekennzeichnet, dass** der von dem Zugkopf (18) zurückgelegte Weg gemessen wird.

6. Verfahren nach Anspruch 4 oder 5, **dadurch gekennzeichnet, dass** die aufzubringende Gesamtkraft und der zurückgelegte Weg in einem Kraft-Weg-Diagramm dargestellt werden und dass das Kraft-Weg-Diagramm in Bezug zu einer vorgefertigten Videoaufnahme des Bohrkanals gesetzt wird.

7. Vorrichtung zum Einziehen eines aus Kurzrohren (12) zusammengesetzten Rohrstranges (10) in einen Bohrkanal (66), umfassend einen Zugkopf (18), der einerseits über ein erstes Zugglied (68) mit einer Zugvorrichtung (66) verbindbar ist und an dem andererseits der Rohrstrang (10) anschließbar ist, sowie ein zweites Zugglied (22), das an seinem einen Ende mit dem Zugkopf (18) und an seinem anderen Ende mit einer Druckplatte (20) verbindbar ist, die zur Anlage an dem jeweiligen zugkopffernen Ende des Rohrstranges (10) bestimmt ist, **dadurch gekennzeichnet, dass** zwischen dem zweiten Zugglied (22) und der Druckplatte (20) eine Kraftmesseinrichtung (48) angeordnet ist.

8. Vorrichtung nach Anspruch 7, **dadurch gekennzeichnet, dass** das zweite Zugglied ein Zuggestänge ist, das aus einzelnen Gestängeabschnitten (32) zusammengesetzt ist, und dass die Gestängeabschnitte (32) ein jeweils auf ihrer gesamten Länge durchgehendes Außengewinde (34) haben, wobei zur Verbindung der Gestängeabschnitte (32) mit einem entsprechenden Innengewinde versehene Verbindungshülsen (36) vorgesehen sind.

9. Vorrichtung nach Anspruch 8, **dadurch gekennzeichnet, dass** das Zuggestänge (22) innerhalb des Rohrstranges (10) mit Zentriermitteln (38, 40) verbindbar ist.

10. Vorrichtung nach Anspruch 9, **dadurch gekennzeichnet, dass** die Zentriermittel einen auf den jeweiligen Gestängeabschnitt (32) aufsetzbaren Zentrierkörper umfassen und dass der Zentrierkörper von einer Ringscheibe gebildet ist, deren Innendurchmesser etwas größer als der Durchmesser des Zuggestänges und deren Außendurchmesser geringfügig kleiner als der Innendurchmesser des Rohrstranges ist.

11. Vorrichtung nach Anspruch 9, **dadurch gekennzeichnet, dass** die Zentriermittel einen auf den jeweiligen Gestängeabschnitt (32) aufsetzbaren Zentrierkörper umfassen und dass der Zentrierkörper eine mit Innengewinden versehene Zentrierhülse (38) und eine Mehrzahl radial von dieser abstehender Zentrierstreben (40) umfasst.

12. Vorrichtung nach Anspruch 11, **dadurch gekennzeichnet, dass** die Länge der Zentrierstreben (40) einstellbar ist.

13. Vorrichtung nach einem der Ansprüche 7 bis 12, **dadurch gekennzeichnet, dass** die Druckplatte (20) einen radialen Schlitz hat, so dass sie seitlich auf den jeweiligen Gestängeabschnitt (32) aufsetzbar ist.

14. Vorrichtung nach einem der Ansprüche 7 bis 13, **dadurch gekennzeichnet, dass** der Zugkopf (18) mindestens einen mit einer Gleitmittelleitung (58) verbindbaren Gleitmittelkanal (54, 56) hat, der an der Außenumfangsfläche des Zugkopfes (18) mündet und durch den Gleitmittel zwischen die Mantelfläche des Rohrstranges (10) und die Wand des Bohrkanals einführbar ist.

15. Vorrichtung nach einem der Ansprüche 7 bis 14, **dadurch gekennzeichnet, dass** der Zugkopf (18) einen konischen Kopfteil (24) und einen am durchmessergroßen Ende desselben ansetzenden Schaftteil (28) hat, der zum Anschluss des Rohrstranges (10) bestimmt ist, und dass der Schaftteil (28) ein gegenüber dem Rohrdurchmesser geringeren Außendurchmesser hat.

16. Vorrichtung nach einem der Ansprüche 7 bis 14, **dadurch gekennzeichnet, dass** der Zugkopf (18) einen konischen Kopfteil (24) und einen am durchmessergroßen Ende desselben ansetzenden Schaftteil (28) hat, der zum Anschluss des Rohrstranges (10) bestimmt ist, dass der Schaftteil (28) ein Rohrstutzen mit einem gegenüber dem Außendurchmesser des Rohrstranges (10) größeren Innendurchmesser ist und dass an der Außenseite des Zugkopfes (18) eine Markierung angebracht ist, die der Lange des vorderen Endes des in dem Schaftteil (28) eingeschobenen Rohrstranges (10) entspricht.

17. Vorrichtung nach einem der Ansprüche 7 bis 16, **dadurch gekennzeichnet, dass** der jeweils letzte Gestängeabschnitt (32) die Druckplatte (20) frei durchsetzt und mit einem Sicherungselement (50) verbunden ist und die Kraftmesseinrichtung (48) von einer ringförmigen Kraftmessdose gebildet ist, die auf den die Druckplatte (10) durchsetzenden Gestängeabschnitt (32) aufgesteckt und zwischen der Druckplatte (20) und dem Sicherungselement (50) eingespannt ist.

## Claims

1. A method for trenchlessly drawing a pipe run (10) assembled from a plurality of short pipes (12) into a bore channel (64), whereby one axial end of the pipe run (10) is connected to a drawing head (18), which is attached via a first drawing member (68) to a drawing apparatus (66), and clamped between the drawing head (18) and a pressure plate (20) abutting against the other axial end of the pipe run (10) via a second drawing member (22) penetrating the pipe run (10), **characterized in that** the force exercised by the second drawing member (22) onto the pressure plate (20) is measured while the pipe run (10) is drawn in.

2. The method according to claim 1, **characterized in that** a force meter (48) is arranged between the back side of the pressure plate (20) facing away from the pipe run (10) and a part (50) fixedly attached to the drawing member.

3. The method according to claim 1 or 2 **characterized in that** a lubricant is introduced into the annular clearance between the pipe run (10) and the bore channel (64) depending on the measurement results.

4. The method according to one of claims 1 to 3, **characterized in that** the total drawing force to be exercised by the drawing apparatus (66) is measured and recorded.

5. The method according to one of claims 1 to 4, **characterized in that** the distance covered by the drawing head (18) is measured.

6. The method according to claim 4 or 5, **characterized in that** the total force to be exercised and the covered distance are depicted in a force-distance-diagram and that the force-distance-diagram is put into relation to a pre-made video recording of the bore channel.

7. An apparatus for drawing a pipe run (10) assembled from short pipes (12) into a bore channel (64), the apparatus comprising a drawing head (18), which is connectable on the one hand via a first drawing member (68) to a drawing apparatus (66) and to which on the other hand the pipe run (10) is attachable, as well as a second drawing member (22) which at its one end is connectable to the drawing head (18) and at its other end is connectable to a pressure plate (20) which pressure plate is adapted to abut against the end of the pipe run (10) facing away from the drawing head, **characterized in that** between the second drawing member (22) and the pressure plate (20) a force meter (48) is arranged.

8. The apparatus according to claim 7, **characterized in that** the second drawing member is a pull rod assembly assembled from single rod sections (32) and **in that** the rod sections (32) each have a continuous external thread (34) over their entire lengths, connection sleeves (36) each having a corresponding internal thread being provided for connection with the rod sections (32).

9. The apparatus according to claim 8, **characterized in that** the pull rod assembly (22) is connectable to centering means (38, 40) inside the pipe run (10).

10. The apparatus according to claim 9, **characterized in that** the centering means comprise a centering body attachable onto the corresponding rod section (32) and that the centering body is formed by an annular disk, whose internal diameter is slightly greater than the diameter of the pull rods and whose external diameter is slightly smaller than the internal diameter of the pipe run.

11. The apparatus according to claim 9, **characterized in that** the centering means comprise a centering body attachable onto the corresponding rod section (32) and that the centering body comprises a centering sleeve (38) provided with an internal thread as well as a plurality of centering struts (40) radially extending from said sleeve.

12. The apparatus according to claim 11, **characterized in that** the length of the centering struts (40) is adjustable.

13. The apparatus according to one of claims 7 to 12, **characterized in that** the pressure plate (20) has a radial slit so that it can be attached laterally onto the corresponding rod section (32).

14. The apparatus according to one of claims 7 to 13, **characterized in that** the drawing head (18) has at least one lubricant channel (54, 56) connectable to a lubricant duct (58), which opens at the external circumferential surface of the drawing head (18) and through which lubricant can be introduced between the casing surface of the pipe run (10) and the wall of the bore channel.

15. The apparatus according to one of claims 7 to 14, **characterized in that** the drawing head (18) is provided with a conical head part (24) and a shaft part (28) attached to the diameter-sized end of said head part, which shaft part is adapted to be connected to the pipe run (10), and that the external diameter of said shaft part (28) is smaller than the pipe diameter.

16. The apparatus according to one of claims 7 to 14, **characterized in that** the drawing head (18) is provided with a conical head part (24) and a shaft part (28) attached to the diameter-sized end of said head part, which shaft part is adapted to be connected to the pipe run (10), **in that** the shaft part (28) is a pipe connector whose internal diameter is bigger than the external diameter of the pipe run (10), and **in that** the external surface of the drawing head (18) is provided with a marking which corresponds to the length of the foremost end of the pipe run (10) introduced into the shaft part (28).

17. The apparatus according to one of claims 7 to 16, **characterized in that** the respective last rod section (32) penetrates freely the pressure plate (20) and is connected to a securing element (50) and **in that** the force meter (48) is formed by an annular load cell which is attached onto the rod section (32) penetrating the pressure plate (20) and clamped between the pressure plate (20) and the securing element (50).

## Revendications

1. Procédé pour insérer par traction, sans creuser de tranchée, une ligne de tubes (10), constituée d'une pluralité de tubes courts (12), dans un conduit foré (64), la ligne de tubes (10) étant raccordée par une de ses extrémités axiales à une tête de traction (18) qui est reliée par un premier élément de traction (68) à un dispositif de traction (66) et étant serrée entre la tête de traction (18) et une plaque de poussée (20), portant contre l'autre extrémité axiale de la ligne de tubes (10), par le biais d'un deuxième élément de traction (22) s'étendant à travers la ligne de tubes (10), **caractérisé en ce que** l'on mesure la force exercée par le deuxième élément de traction (22) sur la plaque de poussée (20) lorsque l'on insère par traction la ligne de tubes (20).

2. Procédé selon la revendication 1, **caractérisé en ce qu'**un capteur de pression (48) est disposé entre le côté arrière de la plaque de poussée (20) qui est opposé à la ligne de tubes (10) et une pièce (50) fixée à l'élément de traction.

3. Procédé selon la revendication 1 ou 2, **caractérisé en ce qu'**un agent de lubrification est introduit dans l'espace annulaire ménagé entre la ligne de tubes (10) et le canal foré (64) en fonction des résultats de la mesure.

4. Procédé selon l'une des revendications 1 à 3, **caractérisé en ce que** l'on mesure et l'on enregistre la force de traction totale qui doit être appliquée par le dispositif de traction (66).

5. Procédé selon l'une des revendications 1 à 4, **caractérisé en ce que** l'on mesure le chemin parcouru par la tête de traction (18).

6. Procédé selon la revendication 4 ou 5, **caractérisé en ce que** la force totale à appliquer et le chemin parcouru sont représentés dans un diagramme force/chemin et **en ce que** le diagramme force/chemin est mis en relation avec un enregistrement vidéo, préalablement effectué, du canal foré.

7. Dispositif pour insérer par traction une ligne de tubes (10), constituée de tubes courts (12), dans un canal foré (66), ledit dispositif comportant une tête de traction (18) qui, d'une part, peut être reliée à un dispositif de traction (66) par le biais d'un premier élément de traction (18) et à laquelle, d'autre part, la ligne de tubes (10) peut être raccordée, ainsi qu'un deuxième élément de traction (22) qui peut être relié par une de ses extrémités à la tête de traction (18) et par son autre extrémité à une plaque de poussée (20) qui est destinée à porter contre l'extrémité respective, distante de la tête de traction, de la ligne de tubes (10), **caractérisé en ce qu'**un dispositif de mesure de force (48) est disposé entre le deuxième élément de traction (22) et la plaque de poussée (20).

8. Dispositif selon la revendication 7, **caractérisé en ce que** le deuxième élément de traction est une tige de traction qui est constituée de portions de tige individuelles (32), et **en ce que** les portions de tige (32) possèdent chacune un filetage extérieur (34) s'étendant sur toute leur longueur, des manchons de liaison (36) dotés d'un filetage intérieur correspondant étant prévus pour relier les portions de tige (32).

9. Dispositif selon la revendication 8, **caractérisé en ce que** la tige de traction (22) peut être reliée à l'intérieur de la ligne de tubes (10) à des moyens de centrage (38, 40).

10. Dispositif selon la revendication 9, **caractérisé en ce que** les moyens de centrage comportent un corps de centrage pouvant être placé sur la portion de tige respective (32), et **en ce que** le corps de centrage est formé par un disque annulaire dont le diamètre intérieur est un peu supérieur au diamètre de la tige de traction et dont le diamètre extérieur est légèrement inférieur au diamètre intérieur de la ligne de tubes.

11. Dispositif selon la revendication 9, **caractérisé en ce que** les moyens de centrage comportent un corps de centrage pouvant être placé sur la portion de tige respective (32) et **en ce que** le corps de centrage comporte un manchon de centrage (38) doté de filets intérieurs et une pluralité de jambes de centrage (40) s'étendant radialement depuis ledit manchon de centrage.

12. Dispositif selon la revendication 11, **caractérisé en ce que** la longueur des jambes de centrage (40) est réglable.

13. Dispositif selon l'une des revendications 7 à 12, **caractérisé en ce que** la plaque de poussée (20) possède une fente radiale de sorte qu'elle peut être placée latéralement sur la portion de tige respective (32).

14. Dispositif selon l'une des revendications 7 à 13, **caractérisé en ce que** la tête de traction (18) possède au moins un canal d'agent lubrifiant (54, 56) qui peut être relié à un conduit d'agent lubrifiant (58), qui débouche à la surface périphérique extérieure de la tête de traction (18) et qui permet d'introduire l'agent lubrifiant entre la surface d'enveloppe de la ligne de tubes (10) et la paroi du canal foré.

15. Dispositif selon l'une des revendications 7 à 14, **caractérisé en ce que** la tête de traction (18) possède une partie de tête conique (24) et une partie formant fût (28) qui est raboutée à l'extrémité de plus grand diamètre de ladite tête conique et qui est destinée à être raccordée à la ligne de tubes (10), et **en ce que** la partie formant fût (28) a un diamètre extérieur qui est inférieur au diamètre des tubes.

16. Dispositif selon l'une des revendications 7 à 14, **caractérisé en ce que** la tête de traction (18) possède une partie de tête conique (24) et une partie formant fût (28) qui est raboutée à l'extrémité de plus grand diamètre de ladite partie de tête et qui est destinée à être raccordée à la ligne de tubes (10), **en ce que** la partie formant fût (28) est une douille tubulaire dont le diamètre intérieur est supérieur au diamètre extérieur de la ligne de tubes (10) et **en ce qu'**un repère est placé du côté extérieur de la tête de traction (18), lequel repère correspond à la longueur de l'extrémité avant de la ligne de tubes (10) introduite dans la pièce formant fût (28).

17. Dispositif selon l'une des revendications 7 à 16, **caractérisé en ce que** la dernière portion de tige (32) s'étend librement à travers la plaque de poussée (20) et est reliée à un élément de sécurité (50) et le dispositif de mesure de force (48) est formé par un capteur de mesure de force de forme annulaire qui est placé sur la portion de tige (32) s'étendant à travers la plaque de poussée (10) et est serré entre la plaque de poussée (20) et l'élément de sécurité (50).
